# EUROPÄISCHE PATENTANMELDUNG

(11) **EP 4 465 138 A1**
(43) Veröffentlichungstag der Anmeldung: **20.11.2024**
(21) Anmeldenummer: 24171412.0
(22) Anmeldetag: 19.04.2024
(51) Int. Cl.: G05B 19/18

(54) **VERFAHREN ZUM BETREIBEN EINER WERKZEUGMASCHINE, RECHENEINRICHTUNG UND WERKZEUGMASCHINE**

(30) Priorität: 11.05.2023 DE 102023112486
(71) Anmelder: HOMAG Plattenaufteiltechnik GmbH, 75365 Calw (DE)
(72) Erfinder: Buer, Benedikt, 70563 Stuttgart (DE); Galambos, Christian, 72189 Vöhringen (DE); Groß, Mathias, 72218 Wildberg (DE); Wirth, Sven, 71263 Weil der Stadt (DE)
(74) Vertreter: DREISS Patentanwälte PartG mbB

(57) **Zusammenfassung**

Ein Verfahren zum Betreiben einer Werkzeugmaschine (10) umfasst folgende Schritte: Automatisches Ermitteln eines aktuellen Werts mindestens eines Parameters; Prüfen durch eine Recheneinrichtung (24; 44), ob durch eine Modernisierungsmaßnahme an der Werkzeugmaschine (10) für einen durchgeführten Bearbeitungsprozess ein günstigerer Wert als bisher für den Parameter erhalten werden kann, wobei die Modernisierungsmaßnahme keinen Austausch eines Verschleißteils durch ein gleiches, aber weniger verschlissenes Teil umfasst; wenn die Prüfung ergibt, dass ein günstigerer Wert erhalten werden kann: automatisches Ausgeben einer Information zu der möglichen Modernisierungsmaßnahme.

## Beschreibung

Die Erfindung betrifft ein Verfahren zum Betreiben einer Werkzeugmaschine, eine Recheneinrichtung sowie eine Werkzeugmaschine nach den Oberbegriffen der nebengeordneten Ansprüche.

Beispielsweise aus der DE 10 2021 124 153 A1 ist es bekannt, automatisch einen Parameter zu ermitteln, der eine Qualität an einem durch einen Bearbeitungsprozess bearbeiteten Werkstück charakterisiert. Konkret wird die Qualität einer durch einen Sägevorgang erzeugten Schnittkante ermittelt. Abhängig davon kann entschieden werden, ob ein Verschleißteil in Form eines Sägeblatts durch ein gleiches, aber nicht verschlissenes Sägeblatt ausgetauscht werden soll.

Aufgabe der vorliegenden Erfindung ist es, ein Verfahren bereitzustellen, welches nicht auf die Verbesserung des Betriebs der Werkzeugmaschine durch den Austausch von Verschleißteilen gerichtet ist, sondern welches auf andere Weise ermöglicht, einen optimalen und zeitgemäßen Betrieb der Werkzeugmaschine sicherzustellen.

Diese Aufgabe wird durch ein Verfahren, eine Recheneinrichtung und eine Werkzeugmaschine mit den Merkmalen der nebengeordneten Ansprüche gelöst.

Die Erfindung gestattet es, jederzeit über eine moderne und gut für einen Bearbeitungsprozess geeignete Technologie zu verfügen. Hierdurch ist es möglich, mit der Werkzeugmaschine eine gute Bearbeitungsqualität am Werkstück zu erzeugen, die Werkzeugmaschine mit einer guten Produktivität zu betreiben, und/oder für einen Produktionsprozess nur vergleichsweise wenig Energie zu verbrauchen.

Besonders vorteilhaft ist die Erfindung bei einer Werkzeugmaschine in Form einer Plattenaufteilanlage, insbesondere einer Plattenaufteilsäge. Mit einer solchen Werkzeugmaschine können großformatige und vergleichsweise dünne plattenförmige Ausgangswerkstücke in aufgeteilte Werkstücke aufgeteilt werden, die beispielsweise für die Herstellung von Möbeln verwendet werden. Typischerweise verfügt eine solche Plattenaufteilsäge über einen Zuführtisch, einen Maschinentisch und einen Entnahmetisch sowie automatische Fördereinrichtungen, welche die Werkstücke automatisiert einer Sägeeinrichtung im Bereich des Maschinentisches zuführen. Zur Steuerung und Regelung der Bearbeitungsprozesse verfügt eine solche typische Plattenaufteilanlage über Sensoren, Stellmotoren und eine Steuer- und Regeleinrichtung bzw. Recheneinrichtung mit entsprechender Hardware und Software und mindestens einem HMI (Human Machine Interface).

Erreicht werden die erfindungsgemäßen Vorteile in einer ersten Variante durch ein Verfahren zum Betreiben einer Werkzeugmaschine (beispielsweise einer Plattenaufteilanlage bzw. Plattenaufteilsäge), welches folgende Schritte umfasst: a. Automatisches Ermitteln eines aktuellen Werts mindestens eines Parameters oder eines zeitlichen Verlaufs von Werten mindestens eines Parameters. Die automatische Ermittlung kann dabei beispielsweise die Signale von Sensoren nutzen oder auf diesen basieren.

Der Parameter kann eine Qualität an einem durch einen Bearbeitungsprozess bearbeiteten Werkstück charakterisieren, im Falle einer Plattenaufteilanlage beispielsweise die Qualität einer Schnittkante oder die Maßhaltigkeit eines aufgeteilten Werkstücks, also beispielsweise die Abweichung einer Ist-Dimension von einer Soll-Dimension. Der Parameter kann auch eine Produktivität der Werkzeugmaschine bei einem durchgeführten Bearbeitungsprozess charakterisieren, beispielsweise eine Taktgeschwindigkeit der Werkzeugmaschine beispielsweise in Form einer Anzahl von Bearbeitungsprozessen pro Zeiteinheit oder in Form einer Anzahl von bearbeiteten Werkstücken pro Zeiteinheit. Für die Produktivitätsbewertung kann auch Wartezeit der Maschine verwendet werden z.B. Wartezeit während Werkstückhandling von Maschinebediener. Schließlich kann der Parameter auch einen Energieeinsatz für einen durchgeführten Bearbeitungsprozess charakterisieren, beispielsweise die gesamte für den Bearbeitungsprozess aufgewandte elektrische Energie, einschließlich der notwendigen Energie für den Antrieb des Werkzeugs sowie für Nebenaggregate wie Gebläse etc und /oder Druckluftverbrauch der Maschine für den Barbeitugsprozess.

Erfindungsgemäß wird in einem Schritt b durch eine Recheneinrichtung geprüft, ob durch eine Modernisierungsmaßnahme an der Werkzeugmaschine für den durchgeführten Bearbeitungsprozess ein günstigerer Wert als bisher für den Parameter erhalten werden kann. Dabei versteht die Erfindung unter dem Begriff der "Modernisierungsmaßnahme" ausdrücklich nicht den bereits aus dem Stand der Technik bekannten Austausch eines Verschleißteils durch ein gleiches, aber weniger verschlissenes Teil. Vielmehr beinhaltet der Begriff der "Modernisierungsmaßnahme" eine substantielle funktionale Veränderung der Werkzeugmaschine. Die Recheneinrichtung prüft also automatisch, ob durch eine mögliche, also tatsächlich auch zur Verfügung stehende Modernisierungsmaßnahme eine bessere Qualität als bisher, eine höhere Produktivität als bisher oder/und ein geringerer Energieverbrauch als bisher erzielbar ist bzw. sind.

Wenn die Prüfung im Schritt b ergibt, dass ein günstigerer Wert erhalten werden kann, wird in einem Schritt c des erfindungsgemäßen Verfahrens eine Information zu der möglichen Modernisierungsmaßnahme automatisch ausgegeben. Die Ausgabe der Informationen kann dabei beispielsweise durch eine Anzeige am HMI der Werkzeugmaschine erfolgen. Möglich ist aber auch beispielsweise das automatische Versenden einer Nachricht, beispielsweise einer E-Mail an eine vorgegebene E-Mail-Adresse, durch die beispielsweise der Benutzer der Werkzeugmaschine über die Möglichkeit einer Modernisierungsmaßnahme und möglichst auch über die konkrete mögliche Modernisierungsmaßnahme selbst in Kenntnis gesetzt wird. Weiterhin kann diese Information an Maschinenhersteller weitergeleitet werden um kundenspezifische Modernisierungsmaßnahme aufzuarbeiten.

Eine zweite Variante des erfindungsgemäßen Verfahrens unterscheidet sich von der ersten Variante insbesondere durch den Verfahrensschritt a. Anstelle einer grundsätzlich automatischen Ermittlung wird bei dieser zweiten Variante durch einen Benutzer manuell oder durch eine Recheneinrichtung automatisch eine Vorgabe gemacht. Die manuelle Vorgabe kann beispielsweise durch eine Eingabe an einem HMI der Werkzeugmaschine erfolgen. Konkret umfasst der Schritt a. entweder ein manuelles Vorgeben eines von der Werkzeugmaschine durchzuführenden geänderten Bearbeitungsprozesses (im Falle der oben beispielhaft genannten Plattenaufteilanlage beispielsweise eines geänderten Aufteilplans) durch einen Benutzer oder ein automatisches Vorgeben eines von der Werkzeugmaschine durchzuführenden geänderten Bearbeitungsprozesses durch eine Recheneinrichtung aufgrund von Daten, die bei in der Vergangenheit durchgeführten Bearbeitungsprozessen gesammelt wurden.

Alternativ umfasst der Schritt a ein manuelles Vorgeben eines Parameters durch einen Benutzer, wobei der Parameter eine Qualität an einem durch einen vorgesehenen Bearbeitungsprozess zu bearbeitenden Werkstück, eine Produktivität der Werkzeugmaschine bei einem vorgesehenen Bearbeitungsprozess und/oder einen Energieeinsatz für einen vorgesehenen Bearbeitungsprozess charakterisiert.

Ähnlich wie bei der ersten Verfahrensvariante wird dann in einem Schritt b durch eine Recheneinrichtung geprüft, ob durch eine Modernisierungsmaßnahme an der Werkzeugmaschine der vorgegebene geänderte Bearbeitungsprozess oder der vorgegebene Parameter möglich gemacht werden kann, wobei die Modernisierungsmaßnahme wiederum keinen Austausch eines Verschleißteils durch ein gleiches, aber weniger verschlissenes Teil umfasst.

Wenn die Prüfung im Schritt b ergibt, dass durch eine Modernisierungsmaßnahme an der Werkzeugmaschine der geänderte Bearbeitungsprozess oder der vorgegebene Parameter ermöglicht werden kann, dann wird in einem Schritt c automatisch eine Information zu der möglichen Modernisierungsmaßnahme ausgegeben, analog zu der ersten Verfahrensvariante.

Bei einer Weiterbildung ist vorgesehen, dass die Modernisierungsmaßnahme das Freischalten einer bisher gesperrten oder inaktive Funktion umfasst. Diese Modernisierungsmaßnahme ist sehr einfach realisierbar. Beispielsweise kann die Funktion durch einen Fernzugriff freigeschaltet werden, beispielsweise durch den Hersteller der Werkzeugmaschine per Internet.

Bei einer Weiterbildung ist vorgesehen, dass die Modernisierungsmaßnahme das Aufspielen einer neuen Software (Software-Update) umfasst. Auch diese Modernisierungsmaßnahme ist sehr einfach realisierbar. In einem konkreten Anwendungsfall könnte es beispielsweise sein, dass der Hersteller der Werkzeugmaschine eine neue Version der Software für die Steuerung der Werkzeugmaschine veröffentlicht. Die neue Version der Software gestattet eine effizientere Nutzung der Werkzeugmaschine und somit eine Erhöhung der Produktivität oder eine Reduktion des Energieverbrauchs. Die Recheneinrichtung erkennt bei der Prüfung im Schritt b, dass die Werkzeugmaschine regelmäßig voll ausgelastet ist und durch das Aufspielen eines Software-Updates die Produktivität der Werkzeugmaschine verbessert und/oder der Energieverbrauch gesenkt werden könnte. Es wird daher dem Benutzer als mögliche Modernisierungsmaßnahme vorgeschlagen, das Software-Update zu kaufen.

Bei einer Weiterbildung ist vorgesehen, dass die Modernisierungsmaßnahme die Installation einer zusätzlichen physischen Komponente, beispielsweise eines automatischen Handhabungssystems in Form eines Roboters, umfasst. Durch eine solche Modernisierungsmaßnahme kann der Funktionsumfang der Werkzeugmaschine erweitert werden.

Bei einer Weiterbildung ist vorgesehen, dass die Modernisierungsmaßnahme den Austausch einer physischen Komponente durch eine andere physische Komponente mit einer anderen Funktionalität umfasst. Durch eine solche Modernisierungsmaßnahme kann die Funktion der Werkzeugmaschine verändert werden. Beispielsweise könnte in den Schritten a und b erkannt werden, dass im Falle einer Werkzeugmaschine in Form einer Plattenaufteilsäge häufig Plattenpakete mit der maximal möglichen Schnitthöhe aufgeteilt werden. Die Recheneinrichtung erkennt bei der Prüfung, dass dann Plattenpakete mit noch mehr einzelnen Platten gesägt werden könnten, wenn das aktuell verwendete Sägeblatt durch ein Sägeblatt mit größerem Durchmesser ausgetauscht werden würde. Es würde in diesem Fall somit im Schritt c als mögliche Modernisierungsmaßnahme der Austausch des Sägeblatts durch ein Sägeblatt mit größerem Durchmesser vorgeschlagen werden.

Bei einer Weiterbildung ist vorgesehen, dass die Modernisierungsmaßnahme eine Schulung umfasst. Durch eine solche Schulung können einem Benutzer der Werkzeugmaschine Maßnahmen im Umgang mit der Werkzeugmaschine gelehrt werden, die die gewünschte Verbesserung oder Veränderung ermöglichen.

Bei einer Weiterbildung ist vorgesehen, dass der Parameter, der eine Qualität an einem durch einen Bearbeitungsprozess bearbeiteten oder zu bearbeitenden Werkstück charakterisiert, eine Abweichung einer Ist-Dimension von einer Soll-Dimension charakterisiert. Dies ist ein sensorisch einfach zu ermittelnder Parameter.

Ein konkretes Anwendungsbeispiel hierzu ist wie folgt: bei einer Plattenaufteilsäge könnte der Benutzer der Plattenaufteilsäge über eine solche Variante der Plattenaufteilsäge verfügen, welche die Option "Spannungsfreischnitte" nicht enthält. Durch solche Spannungsfreischnitte können innere Spannungen in den Ausgangswerkstücken abgebaut werden, wodurch die Maßhaltigkeit bei den aufgeteilten Werkstücken verbessert wird. Hochwertige und damit meist teurere Ausgangswerkstücke weisen jedoch meist nur geringe innere Spannungen auf, so dass dort solche Spannungsfreischnitte nicht notwendig sind.

Wird nun auf preiswertere Ausgangswerkstücke gewechselt, kann anhand entsprechender Sensoren und einer entsprechenden Software der Plattenaufteilanlage erkannt werden, dass die aufgeteilten Werkstücke, die aus den preiswerteren Ausgangswerkstücken hergestellt wurden, häufiger größere Abweichungen einer Ist-Dimension von einer Soll-Dimension aufweisen, beispielsweise krumm sind. Durch die Recheneinrichtung kann festgestellt werden, dass bei diesen nun preiswerteren Ausgangswerkstücken die Qualität in Form der Maßhaltigkeit verbessert werden kann, wenn vor der Aufteilung an den Ausgangswerkstücken Spannungsfreischnitte durchgeführt werden. Es wird also die Information ausgegeben, dass als mögliche Modernisierungsmaßnahme die Funktion "Spannungsfreischnitte" freigeschaltet werden kann, wodurch eine bessere Maßhaltigkeit realisiert werden kann.

Bei einer Weiterbildung ist vorgesehen, dass der Parameter, der eine Produktivität der Werkzeugmaschine charakterisiert, eine Taktgeschwindigkeit der Werkzeugmaschine charakterisiert oder Wartezeit der Maschine. Dies ist ein für den wirtschaftlichen Betrieb der Werkzeugmaschine besonders wichtiger Parameter.

Ein konkretes Anwendungsbeispiel könnte wie folgt aussehen: bei einer Plattenaufteilanlage verändert der Benutzer der Plattenaufteilanlage den Bearbeitungsprozess in Richtung einer Losgröße 1. Dadurch werden die Aufteilpläne komplexer, und die Aufteilpläne enthalten gegenüber einer Losgröße > 1 zunehmend sogenannte "Nachschnittteile". Dies sind solche aufgeteilte Werkstücke, die nochmals einer weiteren Aufteilung unterzogen werden müssen.

Die Recheneinrichtung kann mittels entsprechender Software erkennen, dass die Aufteilpläne bzw. die Bearbeitungsprozesse geändert wurden. Sie kann nun eine bestimmte technische Option als Modernisierungsmaßnahme vorschlagen, welche für eine effizientere Durchführung der Nachschnitte und eine einfachere und effizientere Handhabung der Nachschnittteile und hierdurch eine höhere Taktgeschwindigkeit sorgt.z.B. durch eine besonderes Optimierungsalgorithmus der Schnittpläne oder Optimierungsprogramm.

Bei einer Weiterbildung ist vorgesehen, dass im Schritt b die Recheneinrichtung mittels eines Simulationsprogramms für den durchgeführten oder vorgesehenen Bearbeitungsprozess den Wert des Parameters für eine Mehrzahl von möglichen Modernisierungsmaßnahmen ermittelt und mit dem aktuell ermittelten oder vorgegebenen Wert des Parameters vergleicht. Dies kann softwaretechnisch einfach programmiert werden und gestattet somit eine technisch einfache und zuverlässige Realisierung des erfindungsgemäßen Verfahrens.

Bei einer Weiterbildung ist vorgesehen, dass im Schritt c auch eine Information über den Umfang ausgegeben wird, in dem der Wert des Parameters günstiger wird. Auf diese Weise wird es dem Benutzer ermöglicht, die Vorteile der vorgeschlagenen Modernisierungsmaßnahme noch besser einzuschätzen. Für den Beispielsfall der oben genannten Modernisierungsmaßnahme in Form eines Software-Updates könnten beispielsweise vorab Kennzahlen anhand der typischen Bearbeitungsprozesse aufgezeigt werden, aus denen sich ergibt, wie hoch die Steigerung der Produktivität oder die Einsparung an Energie aufgrund des Software-Updates ausfallen wird. Diese Informationen können sowohl qualitativ als auch quantitativ sein.

Bei einer Weiterbildung ist vorgesehen, dass im Schritt c auch eine Information über die Kosten der Modernisierungsmaßnahme ausgegeben wird. Diese Weiterbildung gestattet es, dass der Benutzer eine Kosten-Nutzen-Analyse durchführen kann. So kann die Entscheidung, ob eine Modernisierungsmaßnahme sinnvoll ist, noch besser begründen werden. Grundsätzlich ist sogar denkbar, dass die Kosten-Nutzen-Analyse von der Recheneinrichtung selbst vorgenommen und das Ergebnis dem Benutzer angezeigt wird.

Bei einer Weiterbildung ist vorgesehen, dass mindestens die Schritte b und c auf Anforderung durch einen Benutzer oder in regelmäßigen zeitlichen Abständen oder zu festgelegten Zeitpunkten durchgeführt werden. Dies hat den Vorteil, dass eine mögliche Modernisierung der Werkzeugmaschine nicht "in Vergessenheit" gerät.

Bei einer Weiterbildung ist vorgesehen, dass mindestens der Schritt b auf einer von der Werkzeugmaschine entfernt angeordneten Recheneinrichtung, insbesondere auf einer bei einem Hersteller der Werkzeugmaschine angeordneten Recheneinrichtung, durchgeführt wird. Hierdurch wird dem Hersteller die Möglichkeit gegeben, im Vorfeld Informationen über Bedarfe bei den Benutzern der Werkzeugmaschinen zu erlangen.

Zusammenfassend geht die Erfindung also beispielhaft davon aus, dass in der Vergangenheit bei einer Werkzeugmaschine bei den durchgeführten Bearbeitungsprozessen Leistungs-, Qualitäts- und Energiekennzahlen erfasst wurden. Mit Hilfe eines Analyse- und Simulationsprogramms wird bewertet, welche Anpassungen der Konfiguration der Werkzeugmaschine zu besseren Leistungs-, Energie- und Qualitätskennzahlen führen würden. Die möglichen Anpassungen sind dabei in einer zentralen Datenbank abgelegt, die nicht auf der Werkzeugmaschine sein muss. Auch die Analyse und Simulation kann entweder direkt auf der Maschine ablaufen oder auf einer entfernt angeordneten Recheneinrichtung, zum Beispiel in einem Rechenzentrum entweder des Betreibers der Werkzeugmaschine oder des Herstellers der Werkzeugmaschine.

Basierend auf diesen Analysen und Simulationen werden dem Benutzer der Werkzeugmaschine Änderungen für seine Werkzeugmaschine vorgeschlagen, die die Leistungs-, Energie- und/oder Qualitätskennzahlen verbessern. Optional kann dem Benutzer anhand einer Simulation gezeigt werden, in welcher Höhe sich die Kennzahlen verändern werden (z.B. +6% Produktivität, -5% Energieverbrauch). Die Vorschläge können dabei auch den monetären und zeitlichen Aufwand, der durch die vorgeschlagene Modernisierungsmaßnahme entsteht, berücksichtigen, es kann also Aufwand gegen Nutzen abgewogen werden.

Die Analyse kann einmalig durchgeführt werden ("on demand") oder regelmäßig oder zu festgelegten Zeitpunkten. Optional kann bei der Analyse ein zukünftiges Produktionsprogramm bzw. eine zukünftiger Bearbeitungsprozess des Benutzers der Werkzeugmaschine berücksichtigt werden, um Leistungs-, Energie- und Qualitätskennzahlen für künftige und andere Bearbeitungen von Werkstücken zu ermitteln. Der Benutzer der Werkzeugmaschine kann entweder zukünftige Bearbeitungsprozesse selbst vorgeben oder die Software kann basierend auf Vergangenheitsdaten einen zukünftigen Bearbeitungsprozess beispielsweise unter Verwendung von statistischen Methoden vorhersagen.

Alternativ kann der Benutzer auch qualitative Änderungen in seinem zukünftigen Bearbeitungsprozess mitteilen (z.B. "mehr Serienfertigung" oder "mehr Losgröße 1"), und das erfindungsgemäße Verfahren schlägt basierend darauf Modernisierungsmaßnahmen vor. Optional kann das erfindungsgemäße Verfahren auch auf einen Maschinenverbund, die Produktionsplanung und -steuerung oder die Gesamtproduktion ausgeweitet werden. Optional kann die Software auch Schulungen basierend auf dem Nutzungsverhalten des Benutzers der Werkzeugmaschine vorschlagen.

Nachfolgend werden Ausführungsformen der Erfindung unter Bezugnahme auf die beigefügte Zeichnung erläutert. In der Zeichnung zeigen:
- Figur 1: eine schematische Darstellung einer Werkzeugmaschine mit unterschiedlichen Hard- und Softwarekomponenten;
- Figur 2: eine Darstellung ähnlich zu Figur 1, jedoch zusätzlich noch mit einer entfernt angeordneten Recheneinrichtung;
- Figur 3: ein funktionales Blockschaltbild eines Verfahrens zum Betreiben der Werkzeugmaschinen der Figuren 1 und 2;
- Figur 4: ein Flussdiagramm eines ersten Ausführungsbeispiels eines Verfahrens zum Betreiben der Werkzeugmaschinen der Figuren 1 und 2;
- Figur 5: ein Flussdiagramm eines zweiten Ausführungsbeispiels eines Verfahrens zum Betreiben der Werkzeugmaschinen der Figuren 1 und 2.

Nachfolgend tragen solche Elemente und Bereiche mit äquivalenten Funktionen auch in unterschiedlichen Figuren und Ausführungsbeispielen die gleichen Bezugszeichen. Sie werden im Normalfall nur bei der erstmaligen Erwähnung im Detail erläutert.

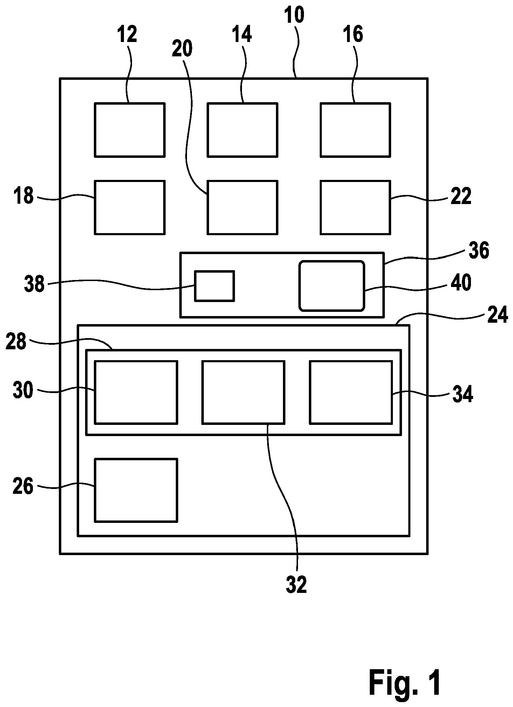

Eine Werkzeugmaschine trägt in Figur 1 insgesamt das Bezugszeichen 10. Sie umfasst mehrere funktionale physische Komponenten 12, 14 und 16, beispielsweise Werkzeuge, Fördereinrichtungen, Haltesysteme, etc. Ferner umfasst sie vorliegend beispielhaft mehrere Erfassungseinrichtungen 18, 20 und 22. Bei diesen kann es sich beispielsweise um Sensoren oder Bilderfassungseinrichtungen o. ä. handeln. Weiterhin gehört zu der Werkzeugmaschine 10 eine Recheneinrichtung 24, die unter anderem einen oder mehrere Mikroprozessoren 26 sowie einen Speicher 28 mit vorliegend beispielhaft mehreren Softwarekomponenten 30, 32 und 34 aufweist.

Schließlich umfasst die Werkzeugmaschine 10 noch ein HMI 36 (Human Machine Interface), welches mindestens eine Eingabeeinrichtung 38 und eine Ausgabeeinrichtung 40 aufweist. Die Eingabeeinrichtung 38 kann beispielsweise eine Tastatur sein, die Ausgabeeinrichtung 40 ein Bildschirm. Möglich ist auch, die Eingabeeinrichtung 38 und die Ausgabeeinrichtung 40 in einem Touchscreen zu vereinen.

Beispielhaft kann es sich bei der Werkzeugmaschine 10 um eine Plattenaufteilanlage, insbesondere um eine Plattenaufteilsäge handeln. Mit einer solchen werden typischerweise großformatige und vergleichsweise dünne plattenförmige Ausgangswerkstücke, beispielsweise aus einem Holzwerkstoff, in aufgeteilte Werkstücke aufgeteilt, die zur Herstellung von Möbeln verwendet werden. Eine solche Plattenaufteilsäge verfügt typischerweise über einen Zuführtisch, von dem aus die großformatigen Ausgangswerkstücke, gegebenenfalls auch als Werkstückstapel, einem Maschinentisch und einer dort vorhandenen Sägeeinrichtung zugeführt werden. Auf der vom Zuführtisch entgegengesetzten Seite des Maschinentisches ist typischerweise ein Entnahmetisch angeordnet. Gegebenenfalls können aufgeteilte Werkstücke der Säge nochmals zugeführt werden, um diese noch einmal durch sogenannte Nachschnitte zu bearbeiten. Für die Handhabung insbesondere der aufgeteilten Werkstücke kann ein Roboter eingesetzt werden, der mit einer Saugeinrichtung mit mehreren Saugglocken ("Saugtraverse") ausgestattet ist, die an einer Oberseite der Werkstücke angreifen kann.

Im Falle einer Plattenaufteilsäge könnte es sich bei den funktionalen physischen Komponenten 12, 14 und 16 beispielsweise um ein Sägeblatt, die oben erwähnte Saugtraverse, ein Winkellineal zum Anlegen und/oder Ausrichten der Werkstücke, einen Antrieb für das Sägeblatt und/oder einen Sägewagen, einen Druckbalken oder Ähnliches handeln. Die Erfassungseinrichtungen 18, 20 und 22 können im Falle einer Plattenaufteilsäge beispielsweise eine Bilderfassungseinrichtung umfassen, welche die Dimensionen der aufgeteilten Werkstücke oder die Qualität einer beim Aufteilen hergestellten Werkstückkante erfasst weiterhin kann die Bilderfassungseinrichtung Produktivität der Maschine oder Effizienz des Handling von Maschinebediener erfassen und bewerten, und/oder Endschalter oder Lichtschranken, welche eine Position eines Werkstücks oder eines Werkzeugs erfassen, und/oder Vibrationssensoren, die Vibrationen an einem Bereich der Werkzeugmaschine, und oder Energieverbrauch der Maschine beispielsweise Stromverbrauch und/oder Druckluftverbrauch erfassen, etc.

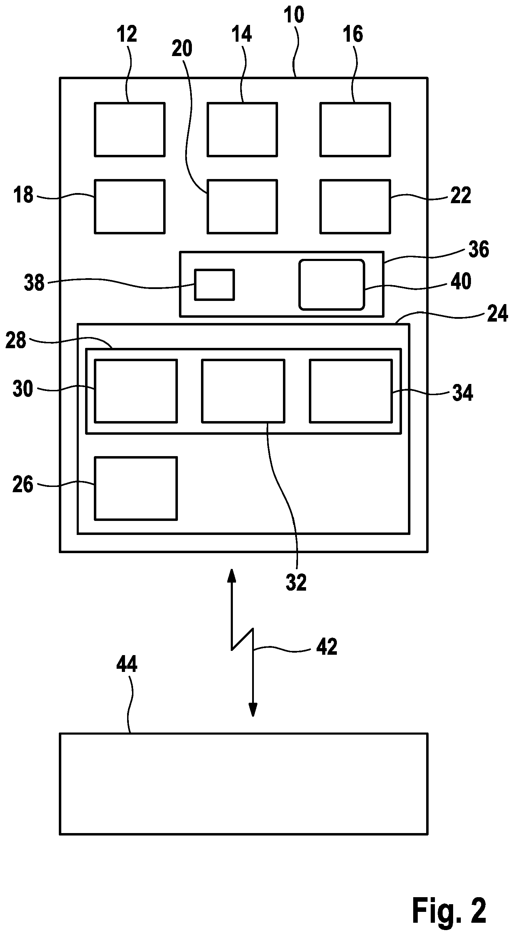

Die in Figur 2 gezeigte Werkzeugmaschine 10 ist im Grunde identisch zu jener der Figur 1 aufgebaut, jedoch kommuniziert sie (Doppelpfeil 42) beispielsweise über eine gesicherte Datenleitung mit einer entfernt angeordneten Recheneinrichtung 44. Die entfernt angeordnete Recheneinrichtung 44 ist beispielsweise beim Hersteller der Werkzeugmaschine 10 angeordnet. Der Begriff "entfernt" bedeutet hier also, dass die Recheneinrichtung 44 nicht in der unmittelbaren Nachbarschaft der Werkzeugmaschine 10 angeordnet ist.

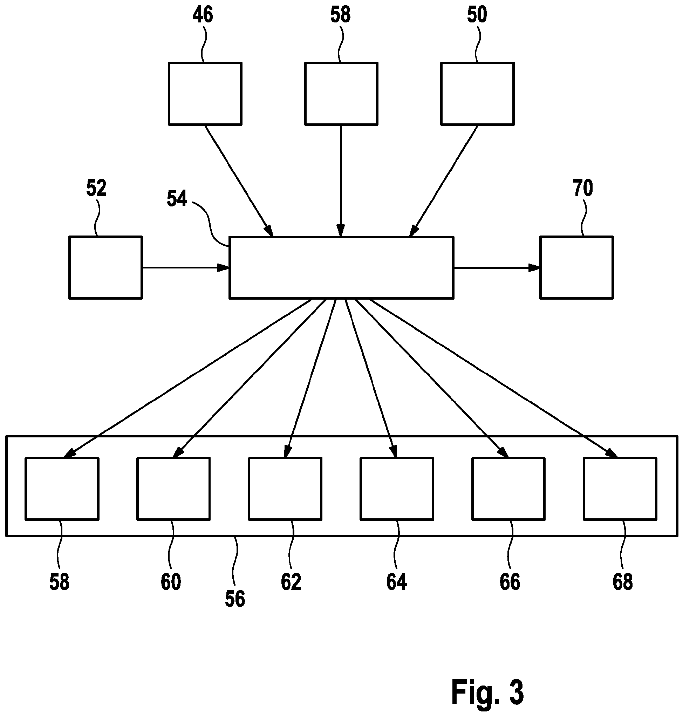

Wie aus Figur 3 ersichtlich ist, kann im Zusammenhang mit der Werkzeugmaschine 10 ein Verfahren mindestens zum Teil automatisch ausgeführt werden, welches es dem Benutzer der Werkzeugmaschine 10 gestattet, durch Modernisierungsmaßnahmen - sofern möglich - Vorteile beim Betrieb der Werkzeugmaschine 10 zu erzielen.

Hierzu werden zunächst Werte eines Parameters 46, 48 und/oder 50 bereitgestellt, oder es wird ein Verlauf der Werte dieser Parameter 46, 48 und/oder 50 bereitgestellt. Der Parameter 46 charakterisiert vorliegend beispielhaft eine Qualität an einem durch einen durchgeführten oder vorgesehenen Bearbeitungsprozess bearbeiteten Werkstück. Im Falle einer Plattenaufteilsäge charakterisiert der Parameter 46 also beispielsweise eine Abweichung einer Ist-Dimension von einer Soll-Dimension am aufgeteilten Werkstück oder eine Qualität einer Schnittkante, beispielsweise deren Welligkeit, oder das Vorhandensein von Ausreißern, etc.

Der Parameter 48 charakterisiert vorliegend beispielhaft einen Energieeinsatz für einen durchgeführten oder vorgesehenen Bearbeitungsprozess. Ein Bearbeitungsprozess kann beispielsweise im Falle einer Plattenaufteilsäge die vollständige Aufteilung eines Ausgangswerkstücks in aufgeteilte Werkstücke beinhalten. Gegebenenfalls kann der Bearbeitungsprozess aber auch ein singulärer Bearbeitungsprozess sein, im Falle einer Plattenaufteilsäge also ein einzelner Sägevorgang.

Der Parameter 50 charakterisiert vorliegend beispielhaft eine Produktivität der Werkzeugmaschine 10 bei einem durchgeführten Bearbeitungsprozess. Wiederum kann der Bearbeitungsprozess im beispielhaften Fall einer Plattenaufteilsäge die vollständige Aufteilung eines Ausgangswerkstücks in aufgeteilte Werkstücke beinhalten, oder er kann ein singulärer Bearbeitungsprozess sein. Der Parameter 50 kann beispielsweise eine Taktgeschwindigkeit der Werkzeugmaschine 10 charakterisieren, im beispielhaften Fall einer Plattenaufteilsäge beispielsweise die Anzahl der pro Zeiteinheit hergestellten aufgeteilten Werkstücke.

Die Werte der Parameter 46, 48 und 50 können dabei auf unterschiedliche Arten und Weisen bereitgestellt werden. Beispielsweise kann ein aktueller Wert eines Parameters oder ein in der Vergangenheit erhaltener Verlauf von Werten eines Parameters automatisch durch eine oder mehrere der Erfassungseinrichtungen 18-22 und/oder die Recheneinrichtung 24 automatisch ermittelt werden, und zwar für einen ganz bestimmten Bearbeitungsprozess, der von der Werkzeugmaschine 10 durchgeführt wurde. Die den Bearbeitungsprozess definierenden Parameter liegen vorliegend beispielhaft in einem Funktionsblock 52 vor (im Falle einer Plattenaufteilsäge beispielsweise in Form eines Schnittplans, gemäß dem ein Ausgangswerkstück in aufgeteilte Werkstücke aufgeteilt wird).

Dabei kann der Bearbeitungsprozess 52 manuell durch einen Benutzer vorgegeben werden, oder er kann von der Recheneinrichtung 24 auf der Basis von in der Vergangenheit durchgeführten Bearbeitungsprozessen 52 und dabei gesammelten ermittelt werden. Insoweit ist es auch möglich, dass manuell von einem Benutzer durch eine entsprechende Eingabe an der Eingabeeinrichtung 38 ein geänderter Bearbeitungsprozess vorgegeben wird, der von der Werkzeugmaschine 10 durchgeführt werden soll. Ebenso ist es möglich, dass von der Werkzeugmaschine 10 bzw. von deren Recheneinrichtung 24 ein geänderter Bearbeitungsprozess automatisch vorgegeben wird, und zwar mittels eines Optimierungsverfahrens auf der Basis von Daten, die bei in der Vergangenheit durchgeführten Bearbeitungsprozessen gesammelt wurden.

Möglich ist alternativ auch, dass ein Wert eines oder mehrerer der Parameter 46-50 durch einen Benutzer manuell vorgegeben wird, beispielsweise durch eine Eingabe an der Eingabeeinrichtung 38. In diesem Fall würde der Wert typischerweise nicht für einen in der Vergangenheit durchgeführten, sondern für einen künftig vorgesehenen Bearbeitungsprozess vorgegeben werden. Beispielsweise könnte der Benutzer durch seine Eingabe einen bestimmten, meist höheren Qualitätsanspruch, eine bestimmte, meist höhere Produktivität oder einen bestimmten, meist geringeren Energieeinsatz vorgeben.

Die oben erwähnten Informationen werden in einem in Figur 3 mit dem Bezugszeichen 54 bezeichneten Funktionsblock, der entweder von der Recheneinrichtung 24 der Werkzeugmaschine 10 oder von der entfernt angeordneten Recheneinrichtung 44 ausgeführt wird, verarbeitet. Dabei wird in der einen Variante geprüft, ob durch eine Modernisierungsmaßnahme an der Werkzeugmaschine 10 für den in der Vergangenheit durchgeführten Bearbeitungsprozess 52 ein günstigerer Wert als bisher für einen oder mehrere der Parameter erhalten werden kann. In der anderen Variante wird in dem Funktionsblock 54 geprüft, ob durch eine Modernisierungsmaßnahme an der Werkzeugmaschine 10 der vorgegebene geänderte Bearbeitungsprozess oder der vorgegebene geänderte Parameter ermöglicht werden kann.

Dabei wird unter dem Begriff der "Modernisierungsmaßnahme" jedoch nicht einfach ein Austausch eines Verschleißteils durch ein gleiches, aber weniger verschlissenes Teil, verstanden. Es geht vorliegend am Beispiel der Plattenaufteilsäge also nicht darum, ein verschlissenes Sägeblatt durch ein gleiches, aber neues und noch nicht verschlissenes Sägeblatt zu ersetzen. Vielmehr beinhaltet der Begriff der "Modernisierungsmaßnahme" eine substantielle funktionale Veränderung der Werkzeugmaschine 10.

Die Prüfung im Funktionsblock 54 kann dabei die Durchführung von Simulationen des Bearbeitungsprozesses beinhalten, wobei bei diesen Simulationen unterschiedliche funktionale Änderungen an der Werkzeugmaschine 10 vorausgesetzt werden. Diese funktionalen Änderungen können beispielsweise als ein Katalog von möglichen funktionalen Änderungen der Recheneinrichtung 24 bzw. 44 bereitgestellt werden.

Ergibt die Prüfung im Funktionsblock 54, dass durch eine Modernisierungsmaßnahme ein günstigerer Wert für einen der Parameter 46-50 erhalten werden kann, dann wird die entsprechende Modernisierungsmaßnahme beispielsweise an der Ausgabeeinrichtung 40 dem Benutzer angezeigt, bzw. wird der Benutzer über die mögliche Modernisierungsmaßnahme an der Ausgabeeinrichtung 40 informiert. Übergreifend trägt in Figur 3 die vorgeschlagene Modernisierungsmaßnahme das Bezugszeichen 56.

Zusätzlich oder alternativ kann der Benutzer auch informiert werden, indem von der Recheneinrichtung 24 oder 44 automatisch eine Mitteilung, beispielsweise in Form einer E-Mail, generiert und an den Benutzer versendet wird, in der dieser auf die mögliche Modernisierungsmaßnahme 56 aufmerksam gemacht wird, und mit der gegebenenfalls auch weitere Details zu der möglichen Modernisierungsmaßnahme 56 offenbart werden.

Beispielsweise kann die mögliche Modernisierungsmaßnahme 56 das Aufspielen einer neuen Software und entsprechendes Abspeichern im Speicher 28 der Recheneinrichtung 24 umfassen (Funktionsblock 58). Hierbei kann die neue Software ein Update einer bisher vorhandenen Softwarekomponente sein, oder es kann sich um eine zusätzliche Softwarekomponente handeln.

Beispielsweise kann die mögliche Modernisierungsmaßnahme 56 auch die Installation einer neuen bzw. zusätzlichen physischen Komponente umfassen (Funktionsblock 60). Beispielsweise könnte eine bisher zumindest zum Teil manuelle Handhabung von Werkstücken durch eine Handhabung mittels eines Roboters ersetzt werden, der als zusätzliche Komponente installiert wird.

Beispielsweise kann die mögliche Modernisierungsmaßnahme 56 auch die Installation einer anderen physischen Komponente umfassen (Funktionsblock 62). Beispielsweise könnte im Falle einer Plattenaufteilsäge das vorhandene Sägeblatt durch ein Sägeblatt mit größerem Durchmesser ersetzt werden.

Beispielsweise kann die mögliche Modernisierungsmaßnahme 56 auch das Freischalten einer bisher theoretisch möglichen, aber noch gesperrten Funktion beinhalten (Funktionsblock 64). Im Falle einer Plattenaufteilsäge kann beispielsweise die Funktion "Durchführen von Spannungsfreischnitten" freigeschaltet werden, durch die innere Spannungen in einem Ausgangswerkstück reduziert werden können durch die so die Qualität (Maßhaltigkeit) an den aufgeteilten Werkstücken verbessert werden kann.

Beispielsweise kann die mögliche Modernisierungsmaßnahme 56 auch darin bestehen, die aktuelle Werkzeugmaschine 10 durch eine andere Werkzeugmaschine 10, beispielsweise ein neueres Modell des gleichen Typs von Werkzeugmaschine 10, zu ersetzen (Funktionsblock 66).

Beispielsweise kann die mögliche Modernisierungsmaßnahme 56 auch einfach darin bestehen, dem Benutzer der Werkzeugmaschine 10 eine Schulung vorzuschlagen (Funktionsblock 68), durch die dem Benutzer der Werkzeugmaschine eine verbesserte Nutzung der Werkzeugmaschine 10 gelehrt wird.

Ergibt die Prüfung durch die Recheneinrichtung 24 bzw. 44, dass durch eine Modernisierungsmaßnahme 56 ein verbesserter Betrieb der Werkzeugmaschine 10 möglich wird, kann neben einer Information über die Art der Modernisierungsmaßnahme 56 auch eine Information darüber ausgegeben werden, welchen Effekt die Modernisierungsmaßnahme 56 tatsächlich hat (Funktionsblock 70). Beispielsweise kann der Benutzer der Werkzeugmaschine 10 darüber informiert werden, um wie viel sich die Produktivität durch die vorgeschlagene Modernisierungsmaßnahme 56 erhöht, oder um wie viel sich der Energieeinsatz aufgrund der vorgeschlagenen Modernisierungsmaßnahme 56 verringert. Die Information kann in Form von relativen oder absoluten Werten ausgegeben werden. Zusätzlich kann der Benutzer auch darüber informiert werden, welche Kosten die Durchführung der Modernisierungsmaßnahme 56 beim Benutzer verursacht.

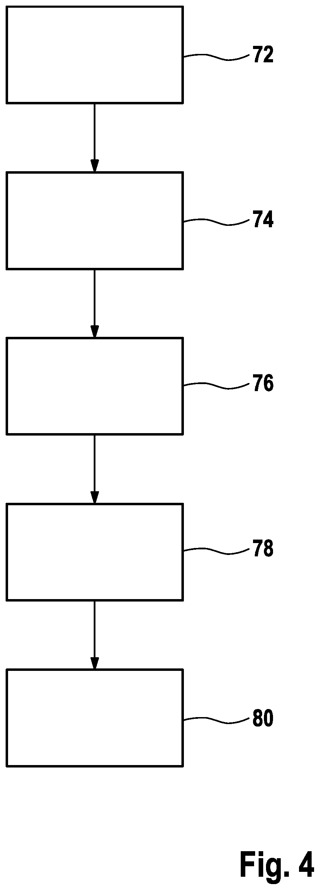

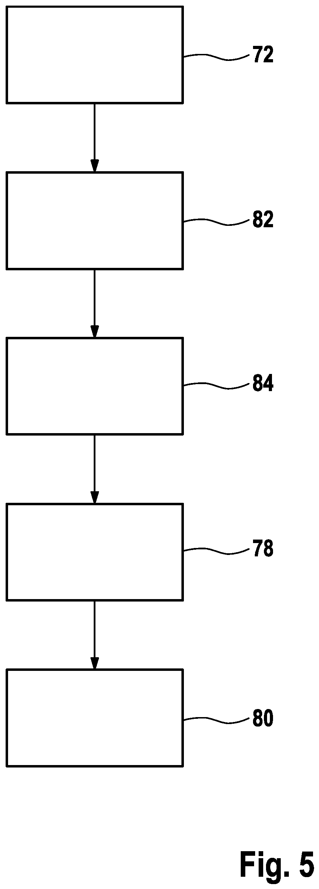

Die oben im Detail beschriebenen Verfahrensvarianten werden nun unter Bezugnahme auf die Figuren 4 und 5 nochmals kurz zusammenfassend beschrieben: in dem zur einen Verfahrensvariante gehörenden Flussdiagramm von Figur 4 wird nach einem Start-Funktionsblock 72 in einem Funktionsblock 74 automatisch ein aktueller Wert mindestens eines Parameters oder ein Verlauf von Werten mindestens eines Parameters ermittelt, wobei es sich bei dem Parameter um mindestens einen der oben beschriebenen Parameter 46-50 handelt.

In einem darauf folgenden Funktionsblock 76 wird durch die Recheneinrichtung 24 oder 44 geprüft, ob durch eine Modernisierungsmaßnahme 56 an der Werkzeugmaschine 10 für den durchgeführten Bearbeitungsprozess 52 ein günstigerer Wert als bisher erhalten werden kann. Dabei umfasst die Modernisierungsmaßnahme 56 ausdrücklich nicht den Austausch eines Verschleißteils durch ein gleiches, aber weniger verschlissenes Teil.

Ergibt die Prüfung im Funktionsblock 76, dass ein günstigerer Wert erhalten werden kann, dann wird in einem Funktionsblock 78 automatisch eine Information zu der möglichen Modernisierungsmaßnahme 56 ausgegeben. Das Verfahren endet in einem Funktionsblock 80.

In dem zur anderen Verfahrensvariante gehörenden Flussdiagramm von Figur 5 wird wiederum nach einem Start-Funktionsblock 72 in einem Funktionsblock 82 entweder manuell ein von der Werkzeugmaschine 10 durchzuführender geänderter Bearbeitungsprozess 52 durch einen Benutzer vorgegeben, oder es wird automatisch aufgrund von Daten, die bei den in der Vergangenheit durchgeführten Bearbeitungsprozessen 52 gesammelt wurden, ein von der Werkzeugmaschine 10 durchzuführender geänderter Bearbeitungsprozess 52 vorgegeben. Nochmals alternativ kann im Funktionsblock 82 manuell ein Wert eines Parameters vorgegeben werden für einen vorgesehenen Bearbeitungsprozess 52, wobei der Parameter wieder einer ist der oben beschriebenen Parameter 46-50.

In einem Funktionsblock 84 wird dann durch die Recheneinrichtung 24 bzw. 44 geprüft, ob durch eine Modernisierungsmaßnahme 56 an der Werkzeugmaschine 10 der geänderte Bearbeitungsprozess 52 oder der vorgegebene Parameter 46-50 ermöglicht werden kann. Dabei umfasst die Modernisierungsmaßnahme 56 ausdrücklich nicht den Austausch eines Verschleißteils durch ein gleiches, aber weniger verschlissenes Teil.

Ergibt die Prüfung im Funktionsblock 84, dass der geänderte Bearbeitungsprozess 52 oder der vorgegebene Parameter 46-50 ermöglicht werden kann, dann wird in einem Funktionsblock 78 automatisch eine Information zu der möglichen Modernisierungsmaßnahme 56 ausgegeben. Auch dieses Verfahren endet in einem Funktionsblock 80.

## Patentansprüche

1. Verfahren zum Betreiben einer Werkzeugmaschine (10), welches folgende Schritte umfasst:
a. Automatisches Ermitteln (74) eines aktuellen Werts mindestens eines Parameters (46-50) oder eines Verlaufs von Werten mindestens eines Parameters, wobei der Parameter eine Qualität (46) an einem durch einen Bearbeitungsprozess bearbeiteten Werkstück, eine Produktivität (50) der Werkzeugmaschine (10) (52) bei einem durchgeführten Bearbeitungsprozess (52) und/oder einen Energieeinsatz (48) für einen durchgeführten Bearbeitungsprozess (52) charakterisiert,
b. Prüfen (76) durch eine Recheneinrichtung (24; 44), ob durch eine Modernisierungsmaßnahme (56) an der Werkzeugmaschine (10) für den durchgeführten Bearbeitungsprozess (52) ein günstigerer Wert als bisher für den Parameter (46-50) erhalten werden kann, wobei die Modernisierungsmaßnahme (56) keinen Austausch eines Verschleißteils durch ein gleiches, aber weniger verschlissenes Teil umfasst;
c. wenn die Prüfung im Schritt b ergibt, dass ein günstigerer Wert erhalten werden kann: automatisches Ausgeben (78) einer Information zu der möglichen Modernisierungsmaßnahme (56).

2. Verfahren zum Betreiben einer Werkzeugmaschine (10), welches folgende Schritte umfasst:
a. Entweder manuelles Vorgeben (82) eines von der Werkzeugmaschine (10) durchzuführenden geänderten Bearbeitungsprozesses (52) durch einen Benutzer oder automatisches Vorgeben (82) eines von der Werkzeugmaschine (10) durchzuführenden geänderten Bearbeitungsprozesses (52) durch eine Recheneinrichtung (24) aufgrund von Daten, die bei in der Vergangenheit durchgeführten Bearbeitungsprozessen (52) gesammelt wurden,
oder manuelles Vorgeben (82) eines Wertes eines Parameters (46-50) durch einen Benutzer, wobei der Parameter eine Qualität (46) an einem durch einen vorgesehenen Bearbeitungsprozess (52) zu bearbeitenden Werkstück, eine Produktivität (50) der Werkzeugmaschine (10) bei einem vorgesehenen Bearbeitungsprozess (52) und/oder einen Energieeinsatz (48) für einen vorgesehenen Bearbeitungsprozess (52) charakterisiert,
b. Prüfen (84) durch eine Recheneinrichtung (24; 44), ob durch eine Modernisierungsmaßnahme (56) an der Werkzeugmaschine (10) der geänderte Bearbeitungsprozess (52) oder der vorgegebene Parameter (46-50) ermöglicht werden kann, wobei die Modernisierungsmaßnahme (56) keinen Austausch eines Verschleißteils durch ein gleiches, aber weniger verschlissenes Teil umfasst,
c. wenn die Prüfung im Schritt b ergibt, dass durch eine Modernisierungsmaßnahme (56) an der Werkzeugmaschine (10) der geänderte Bearbeitungsprozess (52) oder der vorgegebene Parameter (46-50) ermöglicht werden kann: automatisches Ausgeben (78) einer Information zu der möglichen Modernisierungsmaßnahme (56).

3. Verfahren nach wenigstens einem der vorhergehenden Ansprüche, **dadurch gekennzeichnet, dass** die Modernisierungsmaßnahme (56) das Freischalten (64) einer bisher gesperrten bzw. inaktive Funktion umfasst.

4. Verfahren nach wenigstens einem der vorhergehenden Ansprüche, **dadurch gekennzeichnet, dass** die Modernisierungsmaßnahme (56) das Aufspielen oder Aktualisieren (58) einer neue Software oder eines Softwarebausteins umfasst.

5. Verfahren nach wenigstens einem der vorhergehenden Ansprüche, **dadurch gekennzeichnet, dass** die Modernisierungsmaßnahme (56) die Installation (60) einer zusätzlichen physischen Komponente umfasst.

6. Verfahren nach wenigstens einem der vorhergehenden Ansprüche, **dadurch gekennzeichnet, dass** die Modernisierungsmaßnahme (56) den Austausch (62) einer physischen Komponente durch eine andere physische Komponente mit einer anderen Funktionalität, beispielsweise ein Werkzeug mit einer größeren Schnitttiefe, umfasst.

7. Verfahren nach wenigstens einem der vorhergehenden Ansprüche, **dadurch gekennzeichnet, dass** die Modernisierungsmaßnahme (56) eine Schulung (68) umfasst.

8. Verfahren nach wenigstens einem der vorhergehenden Ansprüche, **dadurch gekennzeichnet, dass** der Parameter (46), der eine Qualität an einem durch einen Bearbeitungsprozess (52) bearbeiteten oder zu bearbeitenden Werkstück charakterisiert, eine Abweichung einer Ist-Dimension von einer Soll-Dimension charakterisiert.

9. Verfahren nach wenigstens einem der vorhergehenden Ansprüche, **dadurch gekennzeichnet, dass** der Parameter (50), der eine Produktivität der Werkzeugmaschine (10)oder Wartezeiten der Maschine beim manuellen Handling von Werkstücken oder Effizienz des Maschinenbediener z.B. bei der Handling von Werkstücken charakterisiert, eine Taktgeschwindigkeit der Werkzeugmaschine (10) charakterisiert.

10. Verfahren nach wenigstens einem der vorhergehenden Ansprüche in Verbindung mit Anspruch 1, **dadurch gekennzeichnet, dass** im Schritt b die Recheneinrichtung (24; 44) mittels eines Simulationsprogramms für den durchgeführten oder vorgesehenen Bearbeitungsprozess (52) den Wert des Parameters (46-50) für eine Mehrzahl von möglichen Modernisierungsmaßnahmen (56) ermittelt und mit dem aktuell ermittelten oder vorgegebenen Wert des Parameters (46-50) vergleicht.

11. Verfahren nach wenigstens einem der vorhergehenden Ansprüche in Verbindung mit Anspruch 1, dass im Schritt c auch eine Information über den Umfang ausgegeben wird (78), in dem der Wert des Parameters (46-50) günstiger wird.

12. Verfahren nach wenigstens einem der vorhergehenden Ansprüche, **dadurch gekennzeichnet, dass** im Schritt c auch eine Information über die Kosten der Modernisierungsmaßnahme (56) ausgegeben wird.

13. Verfahren nach wenigstens einem der vorhergehenden Ansprüche in Verbindung mit Anspruch 1, **dadurch gekennzeichnet, dass** mindestens die Schritte b und c auf Anforderung durch einen Benutzer oder in regelmäßigen zeitlichen Abständen oder zu festgelegten Zeitpunkten durchgeführt werden.

14. Verfahren nach wenigstens einem der vorhergehenden Ansprüche, **dadurch gekennzeichnet, dass** mindestens der Schritt b auf einer von der Werkzeugmaschine (10) entfernt angeordneten Recheneinrichtung (44), insbesondere auf einer bei einem Hersteller der Werkzeugmaschine (10) angeordneten Recheneinrichtung (44), durchgeführt wird.

15. Recheneinrichtung (24), welche eingerichtet und durch entsprechende Mittel (26-40) ausgebildet ist, mindestens eines der Verfahren der Ansprüche 1-14 auszuführen.

16. Werkzeugmaschine (10), welche eine Recheneinrichtung (24) nach Anspruch 15 umfasst.
